# EUROPEAN PATENT APPLICATION

(11) **EP 4 596 921 A1**
(43) Date of publication of application: **06.08.2025**
(21) Application number: 25154683.4
(22) Date of filing: 29.01.2025
(51) Int. Cl.: F16H 57/04

(54) **GEARBOX LUBRICATION CHUTE AND GEARBOX COMPRISING SUCH A CHUTE**

(30) Priority: 30.01.2024 FR 2400870
(71) Applicant: Horse Powertrain Solutions, S.L.U., 28108 Alcobendas (Madrid) (ES)
(72) Inventor: HOTTEBART, Pascal, 78288 Guyancourt (FR)
(74) Representative: Elzaburu S.L.P.

(57) **Abstract**

The object of the present invention is a lubrication system (1) for a gearbox comprising an oil distribution chute (2) and an oil supply pipe (3) extending between the distribution chute (2) and a tapping point (4) intended to be positioned in an oil collection area of a gearbox,
Characterised in that the supply line (3) comprises an oil guard siphon (5).

## Description

### Technical scope of the invention

The present invention relates to a lubrication chute for a gearbox gear line.

The invention also concerns a gearbox fitted with such a lubrication chute.

### Technical background

The invention relates to gearboxes. It concerns the lubrication of gearbox gears from the oil retained at the bottom of the gearbox housing.

More specifically, the subject of the invention is a lubrication chute for a line of gears rotating in a sealed housing of a gearbox and/or its associated differential, the body of which has a catchment area receiving the oil projected upwards from the gearbox by pinions or gear rings, and an area for flowing and discharging the oil at targeted lubrication points along the line of gears.

Documents FR-A1-3082264 and FR-A1-3089588, to which reference may be made, illustrate such oil distribution lubrication chutes in a gearbox.

As is well known, the lubrication spout is generally made of a single piece of plastic and, in order to position it and keep it in its functional position in the housing, the lubrication spout usually has several supports for holding the lubrication spout in the housing.

For example, each retaining support is made in the form of one or more parallel fingers which extend axially in a direction orthogonal to a joining plane two complementary parts of the casing and each of which is received in a hole in the casing.

Often, the oil supply line extends between an oil tapping point in the pick-up zone and the spout. As a general rule, if the oil pump is switched off, it will discharge and the oil supply line will empty of oil in the pick-up zone. Depending on the design of the gearbox, the distance between the tapping point and the spout can be considerable. The length of the supply lines has a negative impact on the oil pump's restart time, leading to an increase in the time during which the component to be lubricated is no longer supplied with oil, which can cause premature damage to a bearing, seal, gear or any other component in the shaft line requiring good lubrication.

This problem is particularly common in the gearboxes of vehicles fitted with "stop-start" systems.

### Summary of the invention

The invention relates to a gearbox lubrication system comprising an oil distribution chute and an oil supply line extending between the distribution chute and a tapping point to be positioned in an oil pick-up area of a gearbox, the supply line comprising an oil guard siphon.

The oil siphon allows the creation of a sufficient oil reserve so as to quickly supply the gearbox components requiring significant lubrication, for example gears, bearings and/or seals, or for example a differential device. In this way, the lubrication system according to the invention enables the lubrication system to be primed more quickly and to supply components requiring lubrication in the event, for example, of the ignition of an internal combustion engine of the "automatic stop-start" type.

In particular, the invention may comprise one of the following features, taken alone or in combination with other features as long as they are technically compatible
- the feed pipe comprises a collection zone extending between the tapping point and the oil-guarded siphon, a siphon zone into which the oil-guarded siphon extends, and a distribution zone extending between the oil-guarded siphon and the distribution chute;
- the length of the collection zone is greater than the length of the distribution zone, so that the oil trap is as close as possible to the oil distribution spout for maximum reduction in the time taken to reset the lubrication system;
- the supply line comprises a plurality of oil siphons along its length, so that the supply line comprises a plurality of oil reserve pockets;
- the siphon comprises an area of the pipe which is substantially U-shaped;
- the siphon comprises a reservoir, advantageously in the form of a tank, the reservoir having an oil inlet and an oil outlet in a high position, thus preventing the communicating vacuum effect that could lead to the reservoir emptying. The high position of the reservoir refers to the relative position of the oil inlet and outlet once the reservoir has been assembled in a gearbox compared with its normal assembled position on a vehicle.
- The system also includes an oil pump designed to pressurise the circuit and deliver the oil from the tapping point to the distribution chute.
- The system supply line is intended to be fixed to or integrated or partially integrated into a gearbox housing. Integrated or partially integrated into a casing means that the pipe extends over at least part of its length in the wall of the gearbox casing. Fixed to a housing means that the pipe takes the form of a tube comprising, as is well known, supports enabling it to be fixed to the housing.

The invention also relates to a gearbox comprising a lubrication system according to the invention, in which the tapping point of the oil supply pipe is positioned in a collection zone of the gearbox and the spout is positioned in a high position with respect to the collection zone, advantageously, the duct is positioned in line with a part of the gearbox requiring lubrication, for example a shaft comprising gears, bearings and/or seals, or for example a differential device.

The gearbox comprises a casing delimiting an internal volume into which the lubrication system according to the invention extends at least partially. In some embodiments, the lubrication system can also extend at least partially into the thickness of the gearbox casing.

### Brief description of the figures

Other features and advantages of the invention will become apparent from the detailed description below, for the understanding of which reference is made to the annexed drawings in which :
[Fig.1] - Figure 1 is a schematic view of a lubrication system according to a first embodiment of the invention,
[Fig.2] - Figure 2 is a schematic view of a lubrication system according to a second embodiment of the invention.

### Detailed description of the invention

In the following description, identical, similar or analogous elements will be designated by the same reference numbers.

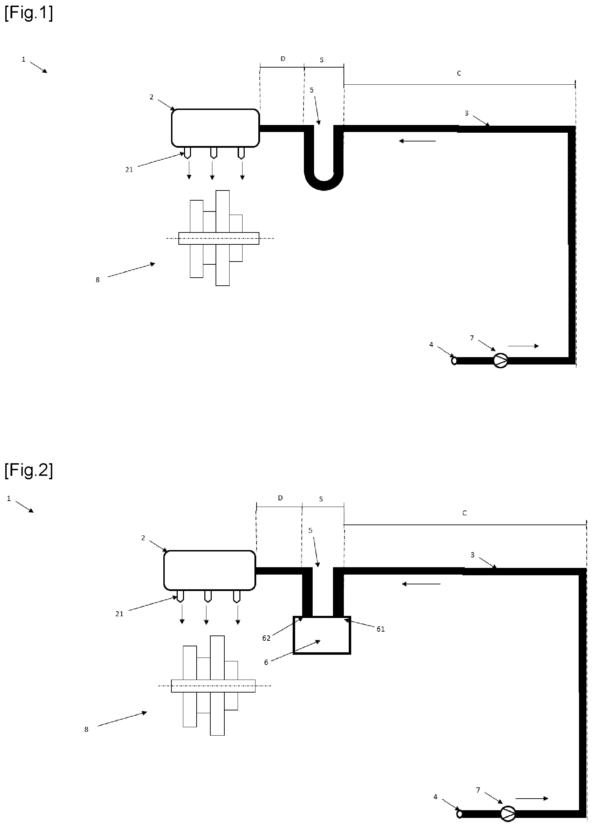

Figures 1 and 2 show a lubrication system 1 for a gearbox (not shown) comprising an oil distribution chute 2 and an oil supply line 3 extending between the distribution chute 2 and a tapping point 4 intended to be positioned in an oil pick-up zone of a gearbox, the supply line 3 comprising an oil trap 5.

The distribution chute 2 further comprises a collection zone C extending between the tapping point 4 and the oil-guard siphon 5, a siphon zone S into which the oil guard siphon 5 extends, and a distribution zone D, extending between the oil guard siphon 5 and the distribution chute 2.

The length of the collection zone is greater than the length of the distribution zone. The siphon 5 is therefore positioned as close as possible to the chute 2.

The lubrication system also includes an oil pump (7) designed to pressurise the circuit and convey the oil from the tapping point (4) to the distribution chute (2).

The distribution chute comprises at least one flow opening designed to supply oil to a zone of interest (e.g. a bearing) in the gearbox.

Figure 1 illustrates a first embodiment in which the siphon 5 comprises a substantially U-shaped siphon zone S of the pipe.

Figure 2 illustrates a second design in which the siphon comprises a reservoir 6, the reservoir 6 having an oil inlet 61 and an oil outlet 62 at the top of said reservoir, the positioning of the inlet 61 and outlet 62 thus preventing the communicating vacuum effect leading to the reservoir emptying once the lubrication system has been fitted in a gearbox.

The chute 2 is positioned above a gearbox component 8 requiring lubrication, shown here as a shaft comprising gears.

## Claims

1. Lubrication system (1) for a gearbox comprising an oil distribution chute (2) and an oil supply line (3) extending between the distribution chute (2) and a tapping point (4) intended to be positioned in an oil pick-up zone of a gearbox, **characterised in that** the oil supply line (3) comprises an oil guard siphon (5).

2. Lubrication system according to the preceding claim in which the distribution chute (2) comprises a collection zone (C) extending between the tapping point (4) and the oil guard siphon (5), a siphon zone (S) into which the oil guard siphon (5) extends, and a distribution zone (D) extending between the oil guard siphon (5) and the distribution chute (2).

3. Lubrication system according to the preceding claim, in which the length of the collection zone is greater than the length of the distribution zone.

4. Lubrication system according to any of the preceding claims, wherein the siphon comprises a siphon zone (S) of the pipe having a substantially U-shape.

5. Lubrication system according to one of the preceding claims in which the siphon comprises a reservoir (6), the reservoir (6) having an oil inlet (61) and an oil outlet (62) in a raised position.

6. Lubrication system according to one of the preceding claims, further comprising an oil pump (7) designed to pressurise the circuit and convey the oil from the tapping point (4) to the distribution chute (2).

7. Gearbox comprising a lubrication system (1) according to one of the preceding claims, in which the tapping point (4) of the oil supply pipe (3) is positioned in a pick-up zone of the gearbox and the chute (2) is positioned in a high position with respect to the pick-up zone, advantageously the duct is positioned plumb with respect to a component of the gearbox requiring lubrication.

8. Gearbox according to the preceding claim comprising a casing delimiting an internal volume into which the lubrication system extends, at least partially.
